# EUROPÄISCHE PATENTSCHRIFT

(11) **EP 0 753 171 B1**
(45) Veröffentlichungstag und Bekanntmachung des Hinweises auf die Patenterteilung: **18.11.1998**
(21) Anmeldenummer: 95904539.4
(22) Anmeldetag: 28.12.1994
(51) Int. Cl.: G06F 7/60, G06G 7/60

(54) **ANALOGER FUZZY-LOGIK-CONTROLLER**
ANALOG FUZZY LOGIC CONTROLLER
UNITE DE COMMANDE ANALOGIQUE A LOGIQUE FLOUE

(30) Priorität: 29.03.1994 DE 4410834
(43) Veröffentlichungstag der Anmeldung: 15.01.1997
(73) Patentinhaber: GMD - FORSCHUNGSZENTRUM INFORMATIONSTECHNIK GMBH, D-53757 Sankt Augustin (DE)
(72) Erfinder: PETERS, Liliane, D-53173 Bonn (DE); BECK, Klaus, D-53125 Bonn (DE); GUO, Shuwei, D-53721 Siegburg (DE)
(74) Vertreter: Hilleringmann, Jochen, Dipl.-Ing.
(86) Internationale Anmeldenummer: EP9404331
(87) Internationale Veröffentlichungsnummer: WO9526528

(56) Entgegenhaltungen:
- EP-A- 0 361 403
- DE-A- 3 016 950
- 1993 IEEE ISCS, CHICAGO, Seiten 1397-1400, XP 000379236 LEME ET AL 'Programmable CMOS analog function synthesis'
- 1993 IEEE ISCS, CHICAGO, Seiten 1385-1388, XP 000379233 TSUKANO ET AL 'A design etc...'

## Beschreibung

Die Erfindung betrifft einen analogen Fuzzy-Logik-Controller mit einer Fuzzifizierungsschaltung, einer Inferenzschaltung und einer Defuzzifizierungsschaltung, wie aus EP 0 489 913 A1 bekannt.

Auf Fuzzy-Logik beruhende Controller werden in zunehmendem Maße zur Regelung verwendet. Grundgedanke bei der Fuzzy-Logik ist es, einen Eingabewert bzw. ein Eingangssignal einer von mehreren linguistischen Eingangsvariablen zuzuordnen und den Grad der Zugehörigkeit des Eingangssignals zu einer oder mehreren linguistischen Variablen zu ermitteln. In Abhängigkeit von dem Zugehörigkeitsgrad eines oder mehrerer Eingangssignale zu im Regelfall mehreren unterschiedlichen linguistischen Variablen werden dann Steuerungsvorgänge des zu regelnden Systems ausgelöst. Der Bereich, innerhalb dessen sich das Eingangssignal bzw. der Eingangswert bewegen kann, ist in mehrere linguistische Variablen unterteilt. Soll beispielsweise eine Regelung in Abhängigkeit der Raumtemperatur innerhalb eines Bereichs von 0 °C bis 50 °C erfolgen, so könnte man diesen Temperaturbereich in die drei linguistischen Variablen "niedrig", "mittel" und "hoch" unterteilen, wobei z.B. der linguistischen Variablen "niedrig" der Temperaturbereich von 0 °C bis 25 °C, der linguistischen variablen "mittel" der Temperaturbereich von 10 °C bis 40 °C und der linguistischen Variablen "hoch" der Temperaturbereich von 25 °C bis 50 °C zugeordnet wird. Jeder linguistischen Variablen ist eine Zugehörigkeitsfunktion zugeordnet, die als semantische Regel der linguistischen Variable bezeichnet wird und die den Grad der Zugehörigkeit eines Eingangssignals, in diesem Fall eines Temperatur-Eingangssignals zu der betreffenden linguistischen Variablen beschreibt. Bei diesen Zugehörigkeitsfunktionen handelt es sich im allgemeinen um Trapez- oder Dreiecksfunktionen, die auf relativ einfache Weise durch analoge oder digitale Schaltungen, die ein derartiges Übertragungsverhalten aufweisen, realisiert werden. Für die Fuzzy-Logik-Regelung günstiger ist es, wenn die Zugehörigkeitsfunktionen jeweils Glockenform haben, da dann der Zusammenhang zwischen der Abweichung eines Eingangssignals vom Maximum und dem Zugehörigkeitsgrad des Eingangssignals zu dieser linguistischen Variablen nicht linear und damit gewichtet wäre.

Glockenförmige und trapez- sowie dreieckförmige Zugehörigkeitsfunktionen für Fuzzy-Regelungen sind z.B. in "Clevere Regler schnell entworfen", Prof. Dr.-Ing. Karl Goser, Dipl.-Inform. Hartmut Surmann, Elektronik 6/1992, Seiten 60 bis 68 beschrieben. Aus EP 0 489 913 A1 ist es grundsätzlich bekannt, in einem Fuzzy-Regler die Zugehörigkeitsfunktionen durch Analog-Schaltungen zu realisieren. Schließlich ist die Erzeugung von z- und s-förmigen Übertragungsfunktionen mittels analoger Differenzverstärkerschaltungen aus DE 42 43 506 C1 bekannt.

In einem Fuzzy-Logik-Controller werden je nach Komplexität der Regelung im allgemeinen 30 bis 300 (syntaktische) Regeln realisiert. Für jede Regel sind mindestens zwei linguistische Variablen, also zwei Zugehörigkeitsfunktionen erforderlich, wenn man einmal davon ausgeht, daß jeder Regel ein Eingangssignal und ein Ausgangssignal zugeordnet sind. Bei beispielsweise 300 realisierten Regeln eines Fuzzy-Logik-Controllers ist es demzufolge nicht ungewöhnlich, daß bis zu 1000 Zugehörigkeitsfunktionen schaltungstechnisch realisiert werden müssen. Bisher wurden den linguistischen Variablen zugeordnete glockenförmige Zugehörigkeitsfunktionen schaltungstechnisch dadurch realisiert, daß die Zugehörigkeitsfunktion abschnittsweise durch Dreiecks- oder Trapezfunktionen linearisiert und die einzelnen linearen Abschnitte schaltungstechnisch realisiert wurden. Im Gegensatz zur Glockenfunktion, bei der einem breiten Bereich von Eingangssignalen Zugehörigkeitsgrade von ungleich Null entsprechen, ist der Bereich, innerhalb dessen der Zugehörigkeitsgrad ungleich Null ist, bei einer Dreiecks- oder Trapezfunktion, die die Glockenfunktion nachbilden soll, relativ schmal. Deshalb muß der Wertebereich, innerhalb dessen das bzw. die Eingangssignale liegen können, mit mehr linguistischen Variablen besetzt sein, als dies bei glockenförmigen semantischen Regeln der Fall ist, in dem jede linguistische Variable durch eine Glockenfunktion beschrieben wird. Damit steigt die Reglerkomplexität. Da bei dreiecksförmigen bzw. trapezförmigen Zugehörigkeitsfunktionen mehr derartige Funktionen schaltungstechnisch zu realisieren sind als bei glockenförmigen Zugehörigkeitsfunktionen, ist im Vergleich zur realisierten Regelkomplexität ein größerer Platzbedarf bzw. recht viel Chip-Fläche erforderlich, wenn der Regler in integrierter Technik aufgebaut wird.

Ein gewisser Nachteil bekannter analoger Fuzzy-Controller ist darin zu sehen, daß sich der Fuzzy-Controller nachträglich nur beschränkt konfigurieren läßt. Bei den bekannten analogen Fuzzy-Controllern ist es beispielsweise nicht möglich, die Form der Zugehörigkeitsfunktionen und deren Positionen innerhalb des zulässigen Eingangswertebereichs des Eingangssignals zu beeinflussen. Auch lassen sich im nachhinein die Fuzzy-Regeln nicht mehr ändern.

Der Erfindung liegt die Aufgabe zugrunde, einen analogen Fuzzy-Controller zu schaffen, der konfigurierbar ist, so daß im nachhinein die Form der Fuzzy-Regeln sowie die Regeln selbst leicht geändert werden können.

Zur Lösung dieser Aufgabe wird mit der Erfindung ein analoger Fuzzy-Controller nach Anspruch 1 vorgeschlagen.

Die Fuzzifizierungsschaltung des erfindungsgemäßen analogen Fuzzy-Controllers weist mehrere erste Spannungserzeugungsvorrichtungen und mehrere zweite Spannungserzeugungsvorrichtungen auf. Die ersten Spannungserzeugungsvorrichtungen sind durch erste Übertragungsfunktionen gekennzeichnet, während die zweiten Spannungserzeugungsvorrichtungen durch zweite Übertragungsfunktionen gekennzeichnet sind. Sämtliche erste Übertragungsfunktionen sind versetzt zueinander, was bedeutet, daß die ersten Übertragungsfunktionen in einem X-Y-Diagramm mit auf der x-Achse aufgetragener Eingangsspannung und auf der y-Achse aufgetragener Ausgangsspannung der ersten Spannungserzeugungsvorrichtungen in X-Richtung um bestimmte Spannungsdifferenzen versetzt zueinander sind. Vorzugsweise sind die Spannungsdifferenzen zwischen benachbarten ersten Übertragungsfunktionen gleich groß. Das zuvor Gesagte gilt in ganz entsprechender Weise für die zweiten Spannungserzeugungsvorrichtungen und deren zweite Übertragungsfunktionen. Insbesondere weisen die ersten und zweiten Übertragungsfunktionen jeweils die Form der beiden Hälften einer Zugehörigkeitsfunktion für eine linguistische Eingangsvariable auf. Zweckmäßigerweise haben die ersten und zweiten Übertragungsfunktionen jeweils die Form der ansteigenden bzw. abfallenden Flanke einer glockenförmigen Zugehörigkeitsfunktion.

Bei der Fuzzifizierungsschaltung des erfindungsgemäßen analogen Fuzzy-Controllers werden also durch die ersten und die zweiten Spannungserzeugungsvorrichtungen zwei Gruppen von Übertragungsfunktionen, nämlich eine erste Gruppe aus ansteigenden Übertragungsfunktionen und eine zweite Gruppe aus abfallenden Übertragungsfunktionen, bereitgestellt. Durch Kombination bestimmter auswählbarer erster Übertragungsfunktionen kann die eine Hälfte einer Zugehörigkeitsfunktion konstruiert werden, während durch Kombination von auswählbaren zweiten Übertragungsfunktionen die zweite Hälfte der Zugehörigkeitsfunktion einer linguistischen Eingangsvariablen konstruiert werden kann. Zu diesem Zweck werden die Ausgänge zuvor bestimmter erster Spannungserzeugungsvorrichtungen mit einer ersten Überlagerungsschaltung und die Ausgänge zuvor bestimmter zweiter Spannungserzeugungsvorrichtungen mit einer zweiten Überlagerungsschaltung verbunden. In den Überlagerungsschaltungen erfolgt eine Überlagerung, insbesondere eine Addition der Ausgangssignale der jeweils angeschlossenen ersten oder zweiten Spannungserzeugungsvorrichtungen. Hierbei ist es zweckmäßig, die Möglichkeit einer gewichteten Überlagerung, beispielsweise einer gewichteten Addition der Ausgangssignale, vorzusehen. Die Wichtungsfaktoren, d.h. die Multiplikatoren für die Ausgangssignale der ersten bzw. zweiten Spannungserzeugungsvorrichtungen werden dabei zweckmäßigerweise von außen den Überlagerungsschaltungen in Form von Steuersignalen zugeführt. Zu diesem Zweck sind die Überlagerungsschaltungen mit Steuereingängen zum Anlegen von (analogen) Steuersignalen versehen. Schaltungstechnisch läßt sich eine einstellbare gewichtete Addition von analogen Signalen insbesondere dadurch realisieren, daß die zu addierenden Signale einzelnen Verstärkern mit einstellbaren Verstärkungsfaktoren (Wichtungsfaktoren) zugeführt werden. Die Verstärkungsfaktoren können dabei Werte kleiner und größer als 1 annehmen. Die auf diese Weise gewichteten Signale werden dann in einer Summierstufe addiert.

Die zuvor beschriebene Überlagerung wird getrennt voneinander sowohl für bestimmte Ausgangssignale der ersten Spannungserzeugungsvorrichtungen als auch für bestimmte Ausgangssignale der zweiten Spannungserzeugungsvorrichtungen durchgeführt. Zweckmäßigerweise sind die Ausgänge der beiden zur Realisierung einer konfigurierbaren Zugehörigkeitsfunktion für eine linguistische Eingangsvariable vorgesehenen Überlagerungsschaltungen mit einer Maximal-Ausgangsschaltung verbunden, die das größere der beiden Ausgangssignale der beiden Überlagerungsschaltungen zu ihrem Ausgang durchschaltet. Es sei in diesem Zusammenhang darauf hingewiesen, daß jede erste und jede zweite Spannungserzeugungsvorrichtung an ihrem Ausgang ein Ausgangssignal ausgibt, wenn an den Eingängen sämtlicher Spannungserzeugungsvorrichtungen das Eingangssignal anliegt. Allerdings unterscheiden sich die Ausgangssignale in ihrer Größe, was mit dem Versatz der ersten und zweiten Übertragungsfunktionen der Spannungserzeugungsvorrichtungen zusammenhängt. Bei der Überlagerung der Ausgangssignale in den Überlagerungsschaltungen entsteht also an den Ausgängen beider Überlagerungsschaltungen ein Ausgangssignal. Um den Grad der Zugehörigkeit eines Eingangssignals zu einer linguistischen Eingangsvariablen zu beschreiben, wird dann aufgrund der Maximal-Ausgangsschaltung das größere der Ausgangssignale der beiden Überlagerungsschaltungen genommen.

Infolge der Möglichkeit, die Überlagerung der Ausgangsspannungen ausgewählter Spannungserzeugungsvorrichtungen von außen verändern zu können, ist es möglich, die Form der Zugehörigkeitsfunktionen während des Betriebs des Fuzzy-Controllers schnell zu ändern. Auch läßt sich damit die Lage einer Zugehörigkeitsfunktion im nachhinein verändern. Damit sind zwei Möglichkeiten der Konfigurierbarkeit eines analogen Fuzzy-Controllers innerhalb von dessen Fuzzifizierungsschaltung gegeben.

Es sei an dieser Stelle darauf hingewiesen, daß mit der Überlagerung mehrerer Ausgangssignale der Spannungserzeugungsvorrichtungen auch der Fall gemeint sein soll, daß bis auf das Ausgangssignal einer ersten bzw. zweiten Spannungserzeugungsvorrichtung alle übrigen der ersten bzw. zweiten Überlagerungsschaltung zugeleiteten Ausgangssignale unterdrückt werden, indem beispielsweise die Wichtungsfaktoren für diese zu unterdrückenden Ausgangssignale mit Null angesetzt werden. Damit würde die Überlagerungsschaltung auf eine Durchschaltung eines Ausgangssignals am Eingang der Überlagerungsschaltung auf dessen Ausgang hinauslaufen. Es ist dabei noch denkbar, daß das durchgeschaltete Ausgangssignal gewichtet wird.

Bei den ersten und zweiten Spannungserzeugungsvorrichtungen muß es sich nicht notwendigerweise um getrennte Einheiten handeln. Es ist beispielsweise denkbar, daß eine erste und eine zweite Spannungserzeugungsvorrichtung durch einen einzigen Differenzverstärker mit zwei Eingängen und zwei Ausgängen realisiert wird. An dem einen Eingang dieses Differenzverstärkers liegt dabei eine Referenzspannung an, die die Lage der Übertragungsfunktionen zwischen dem anderen Eingang und den beiden Ausgängen des Differenzverstärkers beeinflußt. Der andere Eingang des Differenzverstärkers wird mit dem Eingangssignal beaufschlagt.

Die Verwendung von Differenzverstärkern zur Realisierung der ersten und/oder der zweiten Übertragungsfunktionen hat den Vorteil, daß der Ausgangsspannungsverlauf mit größer werdenden Eingangssignalen nicht lineare Bereiche aufweist, weshalb sich insgesamt Übertragungsfunktionen einstellen, die einer Glockenkurvenformhälfte recht gut angenähert sind. Man spricht in diesem Zusammenhang auch von Z- bzw. S-förmigen Übertragungsfunktionen, wobei eine S-förmige Übertragungsfunktion der ansteigenden Flanke einer Glockenkurvenform und eine Z-förmige Übertragungsfunktion der abfallenden Flanke einer Glockenkurvenform entspricht.

Der erfindungsgemäße Fuzzy-Controller ist mit einer Inferenzschaltung versehen, in der die analogen Ausgangssignale der Fuzzifizierungsschaltung weiterverarbeitet werden, und zwar unter Berücksichtigung der vorgegebenen Fuzzy-Regeln. Für jede Regel wird in der Inferenzschaltung ein Signal erzeugt, das den Grad der Zugehörigkeit des Ergebnisses der Regel zu einer von mehreren linguistischen Ausgangsvariablen beschreibt. Zweckmäßig ist es, wenn man unter Beibehaltung des Zugehörigkeitsgrades die linguistische Ausgangsvariable bei ansonsten unverändert gebliebener Regel verändern kann.

Bei mehreren linguistischen Ausgangsvariablen ist für jede Ausgangsvariable ein Komparator vorgesehen, wobei die einen Eingänge sämtlicher Komparatoren mit den den jeweiligen linguistischen Ausgangsvariablen entsprechenden Referenzspannungen beaufschlagt sind. An den anderen Eingängen der Komparatoren liegt die gleiche Steuerspannung an, mit der sozusagen beeinflußt werden kann, welcher Komparator durchschaltet, welche linguistische Ausgangsvariable also angesprochen wird. Die Ausgänge der Komparatoren sind mit steuerbaren Schaltern verbunden, und zwar dergestalt, daß das Ausgangssignal des Komparators an dem Steuereingang des zugehörigen Schalters anliegt. Durch die Komparatoren und bei entsprechender Wahl der Steuerspannung schaltet einer der Komparatoren durch, erzeugt also an seinem Ausgang ein Ausgangssignal. Dieses Ausgangssignal veranlaßt den steuerbaren Schalter, seinen Signaleingang mit seinem Signalausgang zu verbinden. Am Signaleingang sämtlicher steuerbarer Schalter liegt das sich aufgrund einer Fuzzy-Regel ergebende Ausgangssignal an. Da jeder Schalter einer linguistischen Ausgangsvariablen zugeordnet ist, kann durch die erfindungsgemäße Inferenzschaltung im nachhinein jede Fuzzy-Regel dahingehend geändert und damit der Fuzzy-Controller konfiguriert werden, als die linguistische Ausgangsvariable, deren Zugehörigkeitsgrad durch die Größe des sich aus der Fuzzy-Regel ergebenden Ausgangssignals bestimmt ist, verändert werden kann. Mit der hier beschriebenen Inferenzschaltung läßt sich also sozusagen der "THEN"-Teil der Fuzzy-Regeln im nachhinein beliebig verändern. Durch entsprechende Wahl der Steuerspannung lassen sich einzelne Regeln gezielt abschalten. Dies ermöglicht in ganz entscheidender Weise eine Konfigurierbarkeit des Fuzzy-Controllers.

Mit anderen Worten weist die Inferenzschaltung des erfindungsgemäßen Fuzzy-Controllers eine steuerbare Multiplexschaltung auf, die über einen Nutzsignaleingang, einen Steuersignaleingang und mehrere Nutzsignalausgänge verfügt, die den einzelnen linguistischen Ausgangsvariablen zugeordnet sind. Durch die Größe der an den Steuersignaleingang anlegbaren Steuerspannung wird vorgegeben, ob das am Nutzsignaleingang anliegende Eingangssignal blockiert wird oder durchgeschaltet wird, und, wenn es durchgeschaltet wird, auf welchen Ausgang der Multiplexschaltung es durchgeschaltet wird.

Pro linguistischer Ausgangsvariable sind mehrere Multiplexschaltungen bzw, mehrere Komparatoren oder mehrere steuerbare Schalter vorgesehen. Liefert, was der Normalfall sein wird, die Inferenzschaltung pro linguistischer Ausgangsvariable mehrere unterschiedliche Grade der Zugehörigkeit zu dieser linguistischen Ausgangsvariablen repräsentierende Nutzsignale, so wird zweckmäßigerweise dasjenige Nutzsignal bis zum Ausgang der Inferenzschaltung durchgeschaltet, das dem höchsten Zugehörigkeitsgrad entspricht. Zweckmäßigerweise sind also die Ausgänge der steuerbaren Schalter bzw. die denselben linguistischen Ausgangsvariablen zugeordneten Ausgänge der Muliplexschaltungen jeweils mit einer Maximal-Ausgangsschaltung verbunden, die das größte der zugeführten Nutzsignale an ihren Ausgang durchschaltet.

Der erfindungsgemäße Fuzzy-Logik-Controller ist zweckmäßigerweise mit einer Defuzzifizierungsschaltung versehen, die aus der Fuzzy-Menge der Regelausgänge nach der Methode der Ermittlung des Flächenschwerpunkts (Center Of Gravity) einen einzigen Ausgangswert, nämlich das analoge Ausgangssignal ermittelt. Normalerweise ist bei dieser Methode eine Division von Spannungen durchzuführen, die schaltungsmäßig sehr flächenintensiv und aufwendig ist. Um diesen Nachteil zu vermeiden, wird bei einer insofern vorteilhaften Variante der Erfindung vorgeschlagen (s. Anspruch 11), die den einzelnen linguistischen Ausgangsvariablen entsprechenden Spannungswerte entsprechend der Größe der die Zugehörigkeitsgrade zu den einzelnen linguistischen Ausgangsvariablen beschreibenden Ausgangssignalen der Inferenzschaltung zu verstärken bzw. abzuschwächen und die sich daraus ergebenden Spannungen zu addieren. Für jede einer linguistischen Ausgangsvariablen entsprechende Spannung wird dabei ein Verstärker vorgesehen, an dessen Eingang die jeweilige Spannung anliegt. Jeder Verstärker ist, was seine Verstärkung betrifft, einstellbar, wobei der Verstärkungsfaktor jedes Verstärkers Werte unterhalb und oberhalb von 1 annehmen kann. Die Ausgangssignale der Verstärker werden den Eingängen einer Summierstufe zugeführt, an deren Ausgang das Summationssignal erzeugt wird, das dann das analoge Ausgangssignal des Fuzzy-Logik-Controllers darstellt. Auch dieser Weiterbildung der Erfindung kommt unabhängig von der oben beschriebenen Ausbildung der Fuzzifizierungsschaltung und derjenigen der Inferenzschaltung selbständig Bedeutung zu.

Zusammenfassend sollen nachfolgend nochmals die Eigenschaften des erfindungsgemäßen analogen Fuzzy-Logik-Controllers aufgeführt werden:
- Durch die Durchführung der Rechenoperationen im Spannungsbereich (bei der Erfindung wird stets mit Spannungswerten gearbeitet) können die Eigenschaften paralleler Schaltungen eingesetzt werden, was zu einer geringen Chip-Fläche und hohen Rechengenauigkeiten führt.
- Durch den Einsatz analoger Schaltungen können die Spannungssignale asynchron verarbeitet werden, was zu sehr kurzen Rechenzeiten (beispielsweise im Nanosekundenbereich) führt.
- Mit der erfindungsgemäßen Fuzzifizierungsschaltung lassen sich die Form und die Position der Zugehörigkeitsfunktionen für die linguistischen Eingangsvariablen konfigurieren und damit während des Betriebs schnell ändern.
- Durch den Einsatz einer analogen Multiplexschaltung ist die beliebige Änderung der Regeln möglich, was zu einem programmierbaren bzw. konfigurierbaren analogen Fuzzy-Logik-Controller führt. Die Änderung der Regeln kann sofort durchgeführt werden, und zwar asynchron und ohne einen zusätzlichen Betriebsmodus zu erfordern.
- Durch den Verzicht auf eine Divisionsschaltung in der Defuzzifizierungsschaltung kann die Operation, nämlich die Division, in sehr kurzer Zeit auf sehr kleiner Chip-Fläche durchgeführt werden; Verbesserungen der Schnelligkeit der Operationsabarbeitung um mehrere Größenordnungen gegenüber bekannter Konzepte mit Divisionsschaltungen lassen sich mühelos realisieren.

Nachfolgend wird anhand der Figuren ein Ausführungsbeispiel der Erfindung näher erläutert. Im einzelnen zeigen:
- Fig. 1: schematisch den Aufbau eines analogen Fuzzy-Logik-Controllers, der die Funktionseinheiten Fuzzifizierung, Inferenz und Defuzzifizierung aufweist,
- Fig. 2: eine detailliertere Darstellung des Aufbaus der Schaltung für die Fuzzifizierung,
- Fig. 3: eine graphische Darstellung für die beiden Gruppen von jeweils zueinander versetzten Übertragungsfunktionen, aus denen die einzelnen Zugehörigkeitsfunktionen für die linguistischen Eingangsvariablen zusammengestellt werden,
- Fig. 4: eine Detaildarstellung des Aufbaus der Schaltungsblöcke, die gemäß Fig. 2 mit den Ausgängen der Differenzierverstärker verbunden sind,
- Fig. 5: eine Darstellung für eine Zugehörigkeitsfunktion, die aus einer Überlagerung der Übertragungsfunktionen gemäß Fig. 3 mittels der Fuzzifizierungsschaltung gemäß den Fign. 2 und 4 erzeugt worden ist,
- Fig. 6: den Aufbau einer Multiplexschaltung, die am Ausgang der Inferenzschaltung des Fuzzy-Logik-Controllers für jedes Ausgangssignal einer Fu-zzy-Regel vorgesehen ist,
- Fig. 7: die den Multiplexschaltungen nachgeordneten Maximal-Ausgangsschaltungen zur Ermittlung des maximalen Grades der Zugehörigkeit der Ausgangssignale der Fuzzy-Regeln zu den einzelnen linguistischen Ausgangsvariablen und
- Fig. 8: eine Detaildarstellung der Defuzzifizierungsschaltung des Fuzzy-Logik-Controllers zur schaltungstechnischen Realisierung der Center-Of-Gravity-Methode zur Ermittlung des Ausgangssignals des Fuzzy-Logik-Controllers.

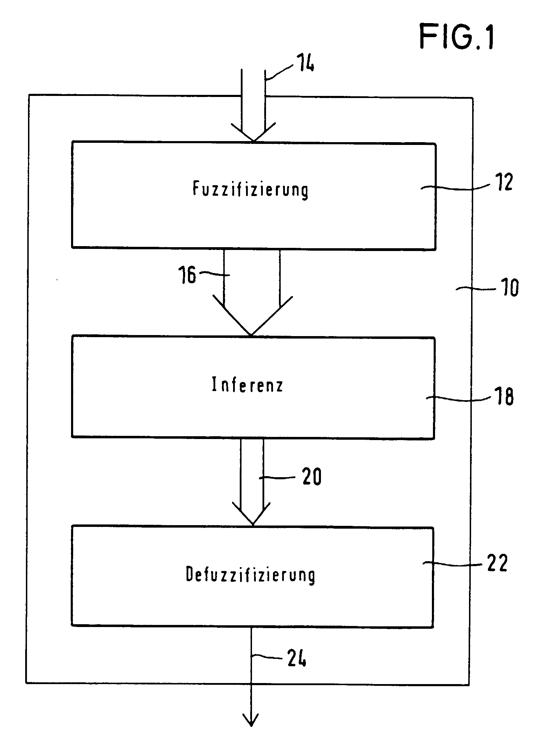

In Fig. 1 ist schematisch in Form von Funktionsblöcken der Aufbau eines analogen Fuzzy-Logik-Controllers 10 dargestellt. Die Eingangsstufe eines derartigen Fuzzy-Controllers 10 wird von einer Fuzzifizierungsschaltung 12 gebildet, die den Eingang des Fuzzy-Controllers 10 bildet und eine Vielzahl von Eingangssignalen 14 empfängt. In der Fuzzifizierungsschaltung 12 wird für jedes Eingangssignal 14 der Grad von dessen Zugehörigkeit zu einer von mehreren linguistischen Eingangsvariablen ermittelt. Typischerweise weist ein Fuzzy-Controller fünf bzw. sieben linguistische Eingangsvariablen auf, nämlich die Eingangsvariablen
Negative Large (NL), Negative Small (NS), Zero (Z), Positive Small (PS) und Positive Large (PL),
bzw.
Negative Large (NL), Negative Medium (NM), Negative Small (NS), Zero (Z), Positive Small (PS), Positive Medium (PM) and Positive Large (PL).

Für jede linguistische Eingangsvariable wird in der Fuzzifizierungsschaltung 12 eine Zugehörigkeitsfunktion schaltungstechnisch realisiert. Bei einer Zugehörigkeitsfunktion für eine linguistische Variable handelt es sich im günstigsten Fall um eine Glockenfunktion. Eine derartige, einer Gauss-Verteilung entsprechende Funktion bietet den Vorteil einer relativ weitreichenden Überlappung der Zugehörigkeitsfunktionen benachbarter linguistischer Variablen, was wiederum zur Folge hat, daß die Anzahl an linguistischen Variablen und damit die Anzahl an Fuzzy-Regeln reduziert werden kann, was Chip-Fläche spart. Die Fuzzifizierungsschaltung 12 liefert also eine Vielzahl von Ausgangssignalen 16, deren Größen ein Maß für die Zugehörigkeitsgrade der Eingangssignale 14 zu den linguistischen Eingangsvariablen sind.

Die Ausgangssignale 16 der Fuzzifizierungsschaltung 12 werden als Eingangssignale einer Inferenzschaltung 18 zugeführt. In dieser Inferenzschaltung 18 werden die Ausgangssignale 16 der Fuzzifizierungsschaltung 12 den Fuzzy-Regeln entsprechend weiterverarbeitet. Die Inferenzschaltung 18 liefert ihrerseits Ausgangssignale 20, wobei die Anzahl dieser Ausgangssignale 20 gleich der Anzahl der linguistischen Ausgangsvariablen ist. Intern errechnet die Inferenzschaltung 18 für jede Fuzzy-Regel ein Zwischensignal, dessen Größe den Grad der Zugehörigkeit des Ergebnisses der Fuzzy-Regel zu den linguistischen Ausgangsvariablen wiedergibt. Genauso, wie für ein Eingangssignal 14 mehrere unterschiedliche Zugehörigkeitsgrade zu verschiedenen linguistischen Eingangsvariablen ermittelt werden, werden auch für jedes Zwischensignal, das sich als Ergebnissignal einer Fuzzy-Regel darstellt, mehrere Zugehörigkeitsgrade zu unterschiedlichen linguistischen Ausgangsvariablen ermittelt. Für jede linguistische Ausgangsvariable wird dann aus der Menge der ermittelten Zugehörigkeitsgrade der maximale Zugehörigkeitsgrad ermittelt. Das diesen maximalen Zugehörigkeitsgrad zu einer linguistischen Ausgangsvariablen darstellende Signal ist dann eines der Ausgangssignale 20, weshalb die Inferenzschaltung 18 insgesamt so viel Ausgangssignale 20 ausgibt, wie linguistische Ausgangsvariablen vorgesehen sind. Was die Anzahl der linguistischen Ausgangsvariablen anbelangt, so wird auf die obigen Ausführungen im Zusammenhang mit der Anzahl der linguistischen Eingangsvariablen verwiesen.

Die Ausgangssignale 20 der Inferenzschaltung 18 werden einer Defuzzifizierungsschaltung 22 als Eingangssignale zugeführt. Die Defuzzifizierungsschaltung 22 ermittelt aus den Ausgangssignalen 20 nach beispielsweise der Center-Of-Gravity-Methode, die an sich bekannt ist, ein einziges Ausgangssignal. Dieses Ausgangssignal 24 stellt dann auch gleichzeitig das Ausgangssignal des Fuzzy-Logik-Controllers 10 dar.

Der analoge Fuzzy-Controller 10 arbeitet durchgehend spannungsgesteuert. Das bedeutet, daß es sich bei den Eingangssignalen, bei den (internen) Zwischensignalen, bei eventuell erforderlichen Steuersignalen und bei den verschiedenen Ausgangssignalen stets um elektrische Spannungen handelt.

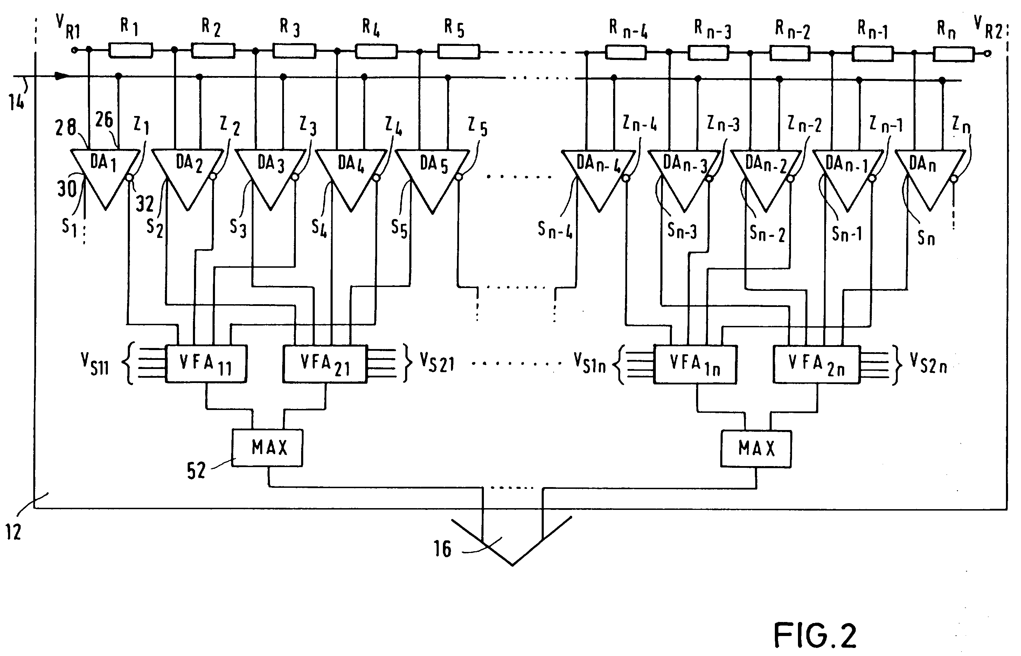

Fig. 2 zeigt teilweise schematisch eine Realisierung für die Fuzzifizierungsschaltung 12 von Fig. 1. Die in Fig. 2 gezeigte Schaltung ist in der Fuzzifizierungsschaltung 12 für jedes der Eingangssignale 14 des Fuzzy-Controllers 10 vorgesehen. Die Schaltung gemäß Fig. 2 dient der Konfigurierbarkeit und Einstellbarkeit der Fuzzifizierungsschaltung insofern, als die Form und Position der analog erzeugten Zugehörigkeitsfunktionen durch Steuerspannungen veränderbar sind.

Nachfolgend wird der Aufbau und die Funktionsweise der Schaltung gemäß Fig. 2 anhand eines einzigen Eingangssignals 14 beschrieben.

Für jedes Eingangssignal 14 ist eine Vielzahl von Differenzverstärkern DA₁ bis DAₙ (n ist eine natürliche Zahl) vorgesehen, bei denen es sich um Operationsverstärker handelt. Jeder Differenzverstärker DA₁ bis DAₙ weist zwei Eingänge 26,28 auf, wobei das Eingangssignal 14 an den Eingängen 26 der Differenzverstärker DA₁ bis DAₙ anliegt. An den anderen Eingängen 28 liegen jeweils unterschiedliche Referenzspannungen an. Im Ausführungsbeispiel gemäß Fig. 2 ist die Erzeugung dieser unterschiedlichen Referenzspannungen durch einen mehrere Widerstände R₁ bis Rₙ aufweisenden Spannungsteiler realisiert, der zwischen die beiden Potentiale V_{R1} und V_{R2} geschaltet ist. Durch den Spannungsteiler wird die Spannung zwischen den beiden Potentialen V_{R1} und V_{R2} in zwischenliegende Spannungswerte, nämlich in die mit den Eingängen 28 der Differenzverstärker DA₁ bis DAₙ verbundenen Referenzspannungen, unterteilt. Die Spannungsdifferenz zwischen den Potentialen V_{R1} und V_{R2} wird entsprechend dem Eingangsspannungsbereich gewählt, in dem Werte für das Eingangssignal 14 erwartet werden.

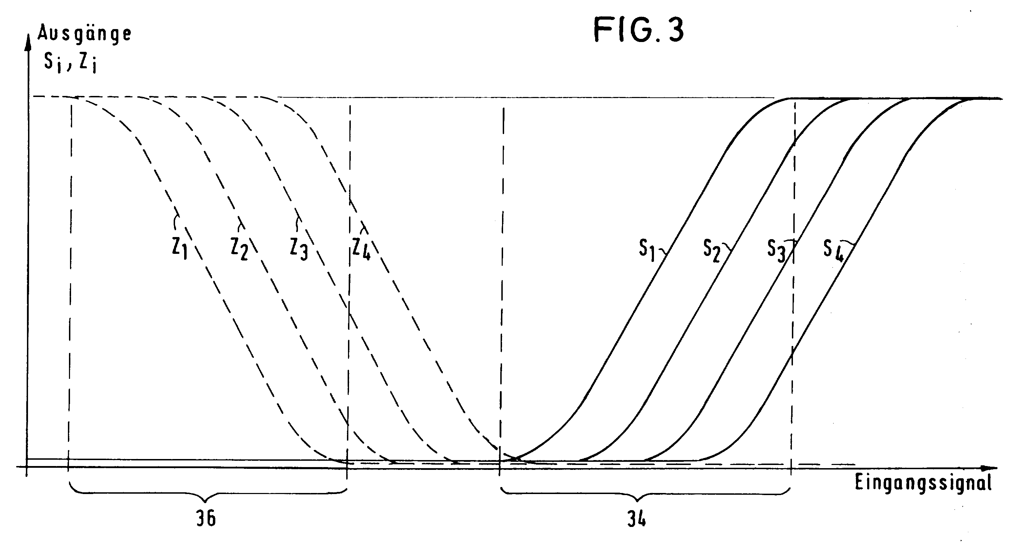

Die Differenzverstärker DA₁ bis DAₙ sind ferner jeweils mit zwei Ausgängen 30,32 versehen, die in den Figuren auch durch ihre Ausgangssignale S₁ und Z₁ bis Sₙ und Zₙ bezeichnet sind. An diesen beiden Ausgängen stellen sich die in Fig. 3 graphisch dargestellten Ausgangssignalverläufe Sᵢ, Zᵢ ein. Zu erkennen ist, daß jeder Differenzverstärker DA₁ bis DAₙ an seinem S-Ausgang 30 ein mit zunehmender Eingangsspannung am Eingang 26 ansteigendes Ausgangssignal und an seinem Z-Ausgang 32 ein mit zunehmender Spannung an seinem Eingang 26 abfallendes Ausgangssignal erzeugt. Der Verlauf der Ausgangsspannungen an S- und Z-Ausgängen wird nachfolgend kurz anhand des Differenzverstärkers DA₁ unter Bezugnahme auf Fig. 3 beschrieben.

Solange die Spannung am Eingang 26 des Differenzverstärkers DA₁ unterhalb des in Fig. 3 mit 34 bezeichneten Spannungsbereichs liegt, bleibt die Ausgangsspannung am S-Ausgang auf einem gleichbleibenden niedrigen Wert. Nimmt die Eingangsspannung am Eingang 26 Werte im Spannungsbereich 34 an, so ergibt sich der in Fig. 3 gezeigte Ausgangsspannungsverlauf S₁, der im wesentlichen der ansteigenden Flanke einer glockenförmigen Funktion entspricht. Bei Eingangsspannungswerten oberhalb des Spannungsbereichs 34 verbleibt der S-Ausgang auf einem gleichbleibenden maximalen Ausgangsspannungswert. Die Lage des Spannungsbereichs 34 wird durch die Größe der am Eingang 28 des Differenzverstärkers DA₁ anliegenden Referenzspannung bestimmt.

Der Spannungsverlauf am Z-Ausgang 32 des Differenzverstärkers DA₁ ist im wesentlichen komplementär zum Ausgangsspannungsverlauf an dem S-Ausgang. Solange die Eingangsspannung am Eingang 26 kleiner ist als durch einen Spannungsbereich 36 vorgegeben, verbleibt der Z-Ausgang auf der gleichbleibenden maximalen Ausgangsspannung, die identisch zur maximalen Ausgangsspannung am S-Ausgang ist. Bei Eingangsspannungswerten am Eingang 26 innerhalb des Spannungsbereichs 36 stellt sich am Z-Ausgang der in Fig. 3 bei Z₁ dargestellte Verlauf dar, der im wesentlichen der abfallenden Flanke einer Glockenfunktion gleicht. Wird die Eingangsspannung größer als der Spannungsbereich 36, so verbleibt der Z-Ausgang auf gleichbleibendem niedrigen Spannungspegel, der gleich dem minimalen Ausgangsspannungspegel des S-Ausgangs ist. Die Lage des Spannungsbereichs 36 hängt wiederum mit der Größe der Referenzspannung zusammen, die am Eingang 28 des betreffenden Differenzverstärkers anliegt. Bei den Differenzverstärkern DA₁ handelt es sich also mit anderen Worten um eine Art von Fensterdiskriminatoren, die bei Eingangsspannungswerten im Bereich zwischen der unteren Grenze des Spannungsbereichs 36 und der oberen Grenze des Spannungsbereichs 34 ein Ausgangssignal an einem ihrer beiden S- bzw. Z-Ausgänge liefern, das verschieden ist von den Ausgangssignalen, die bei außerhalb des zuvor genannten Spannungsbereichs liegenden Eingangsspannungen ausgegeben werden. Die Gesamtübertragungsfunktion der Differenzverstärker DA₁ bis DAₙ kann als inverse Trapezform aufgefaßt werden, wobei sich die Lage dieser Trapezform innerhalb des zulässigen Spannungsbereichs für das Eingangssignal durch die Wahl der an dem betreffenden Differenzverstärker anliegenden Referenzspannung bestimmt. Der Abstand der trapezförmigen Übertragungsfunktionen wird also im Beispiel gemäß Fig. 2 durch die Größe der Widerstände R₁ bis Rₙ des Spannungsteilers bestimmt; insbesondere sind diese Widerstände gleich zu wählen, womit sich die in Fig. 3 für die Differenzverstärker DA₁ bis DA₄ dargestellte Kurvenschar ergibt.

Das Gesamtübertragungsverhalten eines Differenzverstärkers DA₁ bis DAₙ läßt sich durch eine erste und eine zweite Übertragungsfunktion beschreiben, die in Fig. 3 mit S₁ bzw. Z₁ bis S₄ bzw. Z₄ für die ersten Differenzverstärker DA₁ bis DA₄ bezeichnet sind. Dabei beschreiben diese ersten und zweiten Übertragungsfunktionen (in Fig. 3 sind die ersten Übertragungsfunktionen durchgezogen bezeichnet, während die zweiten Übertragungsfunktionen gestrichelt gezeichnet sind) das Übertragungsverhalten zwischen dem Eingang 26 für das Nutzsignal oder Eingangssignal 14 und dem Ausgang 30 sowie zwischen dem Eingang 26 und dem Ausgang 32 der Differenzverstärker DA₁ bis DAₙ. Anders ausgedrückt stellt also jeder Differenzverstärker DA₁ bis DAₙ sozusagen zwei Spannungserzeugungsschaltungen dar, die durch die Übertragungsfunktionen der Fig. 3 gekennzeichnet sind.

Die Ausgänge 30,32 der Differenzverstärker DA₁ bis DAₙ werden mit ersten und zweiten Spannungsüberlagerungsschaltungen VFA₁₁ und VFA₂₁ bis VFA₁ₙ und VFA₂ₙ verbunden. Dabei sind die Eingänge der Schaltungen VFA₁₁ bis VFA₁ₙ mit den Z-Ausgängen 32 bestimmter, jeweils unterschiedlicher Differenzverstärker DA₁ bis DAₙ verbunden, während die Eingänge der Schaltungen VFA₂₁ bis VFA₂ₙ mit den S-Ausgängen bestimmter Differenzverstärker DA₁ bis DAₙ verbunden sind. In den Überlagerungsschaltungen VFA erfolgt eine Addition der Ausgangsspannungen, die sich bei Anliegen des Eingangssignals 14 an den Z- oder S-Ausgängen derjenigen Differenzverstärker DA₁ bis DAₙ einstellen, die mit der betreffenden Überlagerungsschaltung VFA verbunden sind. Für jede zu realisierende Zugehörigkeitsfunktion ist eine erste und eine zweite Überlagerungsschaltung VFA₁₁, VFA₂₁ bis VFA₁ₙ, VFA₂ₙ vorgesehen. Jede erste und jede zweite Überlagerungsschaltung übernimmt dabei die Funktion, den Verlauf der beiden Flanken (ansteigende Flanke oder abfallende Flanke) der gewünschten Zugehörigkeitsfunktion zu realisieren.

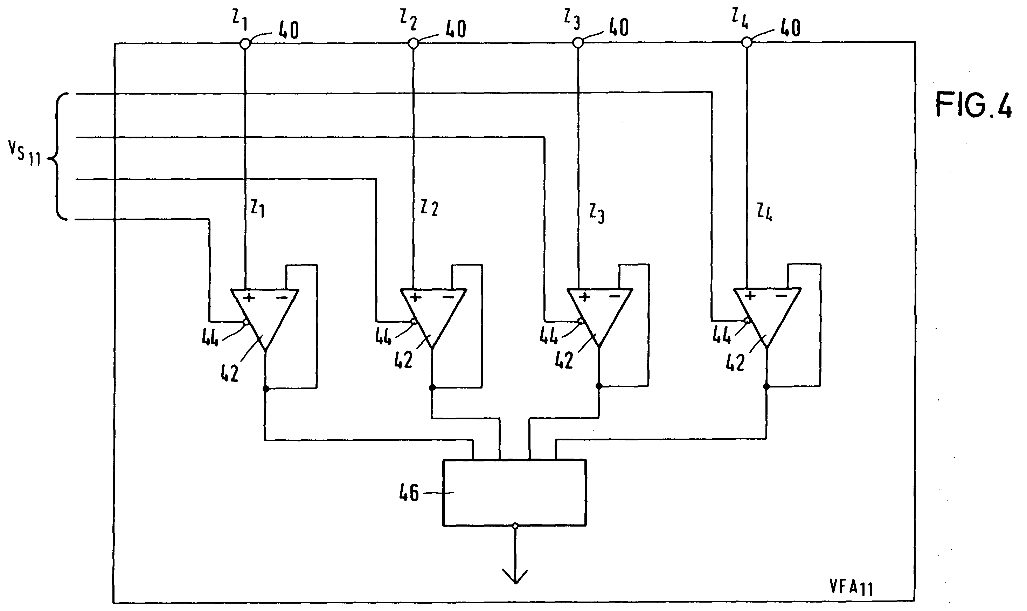

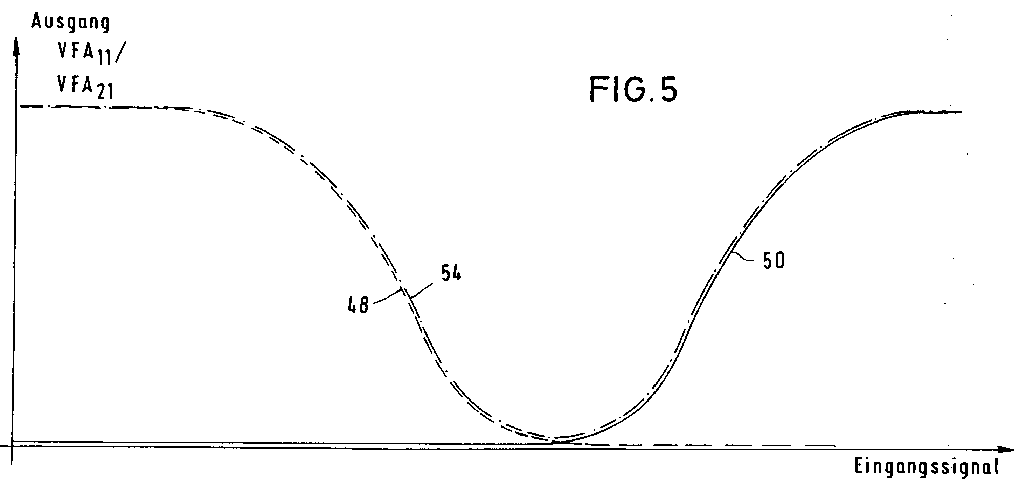

Der Aufbau der Überlagerungsschaltung VFA₁₁ ist im Detail in Fig. 4 dargestellt. Die Eingänge 40 der Überlagerungsschaltung VFA₁₁ sind mit den Ausgängen 32 der Differenzverstärker DA₁ bis DA₄ verbunden. Jeder Eingang 40 ist intern mit einem Verstärker 42 verbunden, dessen Verstärkung einstellbar ist. Zu diesem Zweck ist jeder Verstärker 42 mit einem Steuereingang 44 versehen, an dem eine Steuerspannung anlegbar ist. Die Steuerspannungen sind in Fig. 4 mit Vₛ gekennzeichnet. Durch diese Steuerspannungen wird der Verstärkungsfaktor eines jeden Verstärkers 42 individuell eingestellt. Daraus ergibt sich die Konsequenz, daß die Ausgangsspannungen der angeschlossenen Differenzverstärker gewichtet in die Überlagerung eingehen. Die Überlagerung selbst besteht dann aus einer Addition der Ausgangsspannungen der Verstärker 42, die in einer Summierstufe 46 addiert werden. Die Summierstufe 46 gibt als Ausgangssignal das Summationssignal aus. In dem Beispiel gemäß Fig. 4 wird also die abfallende Flanke einer eine inverse Glockenform aufweisenden Zugehörigkeitsfunktion durch gewichtete Addition von vier Z-Ausgängen der Differenzverstärker DA₁ bis DAₙ nachempfunden (s. Fig. 5). Dementsprechend bildet die Überlagerungsschaltung VFA₂₁ gemäß Fig. 2 die ansteigende Flanke einer durch die vier S-Ausgänge der Differenzverstärker DA₁ bis DAₙ erzeugten Überlagerungsfunktion nach. Am Ausgang der Summierstufe der ersten Überlagerungsschaltung VFA₁₁ stellt sich also in Abhängigkeit von dem Spannungswert für das Eingangssignal 14 der in Fig. 5 mit 48 bezeichnete Spannungsverlauf ein. Demgegenüber ergibt sich in Abhängigkeit von der Größe des Eingangssignals 14 am Ausgang der zweiten Überlagerungsschaltung VFA₂₁ der in Fig. 5 bei 50 dargestellte Signalverlauf. Die beiden Ausgänge der ersten und zweiten Überlagerungsschaltungen VFA₁₁ und VFA₂₁ gehen als Eingangssignale in eine Filterschaltung in Form einer Maximal-Ausgangsschaltung S₂ ein, die an ihren (einzigen) Ausgang das jeweils größere ihrer beiden Eingangssignale durchschaltet. Damit ergibt sich als Ausgangssignalverlauf der Maximal-Ausgangsschaltung 52 in Abhängigkeit von der Größe des Eingangssignals 14 der in Fig. 5 strichpunktiert dargestellte glockenkurvenförmige Verlauf 54.

Auf die zuvor beschriebene Weise wird nun für jede linguistische Eingangsvariable eine Zugehörigkeitsfunktion aufgebaut. Bei beispielsweise fünf linguistischen Eingangsvariablen wären also fünf erste Überlagerungsschaltungen VFA₁₁ bis VFA₁₅, fünf zweite Überlagerungsschaltungen VFA₂₁ bis VFA1₂₅ und fünf Maximal-Ausgangsschaltungen 52 erforderlich. Für jede der fünf ersten und zweiten Überlagerungsschaltungen ist jeweils ein Satz von Steuerspannungen V_{S11}, V_{S21} bis V_{S1n} und V_{S2n} erforderlich. Die Ausgangssignale der in diesem Fall fünf Maximal-Ausgangsschaltungen 52 bilden die an die Inferenzschaltung 18 weiterzugebenden Ausgangssignale 16 für ein Eingangssignal 14. Die Anzahl der Ausgangssignale 16 ist also gleich dem Produkt aus der Anzahl der Eingangssignale 14 und der Anzahl an linguistischen Eingangsvariablen.

Die zuvor beschriebene Fuzzifizierungsschaltung 12 macht es möglich, den Fuzzy-Controller bezüglich Form und Position seiner Zugehörigkeitsfunktionen zu konfigurieren. Dies erfolgt auf recht einfache Art und Weise durch von außen an die Fuzzifizierungsschaltung 12 anlegbare Steuerspannungen. Darüber hinaus liefert die Fuzzifizierungsschaltung 12 glockenkurvenförmige Zugehörigkeitsfunktionen, was letztendlich zu einer Reduzierung der für eine zuverlässige Regelung minimal erforderlichen Anzahl von linguistischen Eingangsvariablen führt, was wiederum Chip-Fläche spart. Aus schaltungstechnischen Gründen werden als Zugehörigkeitsfunktionen invertierte Glockenfunktionen aufgebaut. Mit derartigen invertierten Funktionen gestaltet sich die Weiterverarbeitung der Spannungssignale einfacher. Grundsätzlich spielt es aber keine Rolle, ob die Glockenfunktionen invertiert sind oder nicht. Sind sie nicht invertiert, dann sind die Maximal-Ausgangsschaltungen 52 durch Minimal-Ausgangsschaltungen zu ersetzen.

In der Inferenzschaltung 18 erfolgt die Weiterverarbeitung der Ausgangssignale 16 der Fuzzifizierungsschaltung, und zwar den aufgestellten Fuzzy-Regeln entsprechend. Für jede Fuzzy-Regel erzeugt die Inferenzschaltung 18 intern Signale, die die Grade der Zugehörigkeit des Ergebnisses der Fuzzy-Regel zu den linguistischen Ausgangsvariablen beschreiben. Bei dem Entwurf eines Fuzzy-Controllers ist aber oftmals von Vorteil, wenn im nachhinein die Zuordnung des Grades der Zugehörigkeit eines Regelausgangs zu einer linguistischen Ausgangsvariablen verändert werden kann. Diese Möglichkeit ist darüber hinaus auch insofern von Vorteil, als damit allgemeingültige Fuzzy-Controller geschaffen werden können, die dem jeweiligen Anwendungszweck speziell angepaßt werden können. Die Inferenzschaltung 18 ist an ihrem Ausgang mit einer Vielzahl von analogen Multiplexschaltungen 56 versehen, wobei für jeden Regelausgang eine derartige Multiplexschaltung 56 vorgesehen ist. Jede Multiplexschaltung 56 weist einen Eingang 58 auf, an dem das Ausgangssignal einer Fuzzy-Regel oder genauer gesagt das den "IF"-Teil einer Fuzzy-Regel repräsentierende Signal anliegt. Die Multiplexschaltung 56 ist darüber hinaus mit einem zweiten Eingang 60 versehen, an den eine Steuerspannung anlegbar ist. Die Aufgabe der Multiplexschaltung 56 ist es, das an ihrem Eingang 58 anstehende Signal auf einen von mehreren Ausgängen 62 durchzuschalten. Die Multiplexschaltung 56 hat so viele Ausgänge 62, wie linguistische Ausgangsvariablen vorgesehen sind. Jeder Ausgang 62 ist also einer linguistischen Ausgangsvariablen zugeordnet.

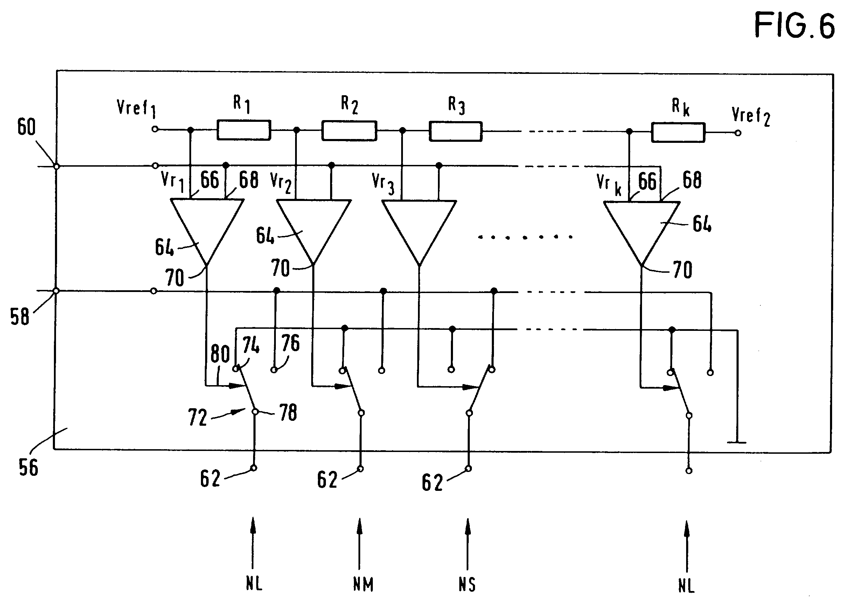

Gemäß Fig. 6 ist die Multiplexschaltung 56 mit mehreren Diskriminatoren 64 versehen, die jeweils zwei Eingänge 66,68 aufweisen. Die einen Eingänge 68 sind sämtlich mit dem Eingang 60 der Multiplexschaltung 56 verbunden, während an den anderen Eingängen der Diskriminatoren 64 unterschiedliche große Referenzspannungen anliegen, die durch Spannungsteilung mittels eines die Widerstände R₁ bis Rₖ aufweisenden Spannungsteilers erzeugt werden. Der Spannungsteiler ist zwischen zwei Referenzpotentiale V_{ref1} und V_{ref2} geschaltet. Jeder Diskriminator 64 verfügt damit über einen empfindlichen Eingangsspannungsbereich, wobei sämtliche dieser Eingangsspannungsbereiche voneinander verschieden sind. Liegt die Steuerspannung, die den Diskriminatoren über deren Eingänge 68 zugeführt wird, innerhalb eines dieser empfindlichen Eingangsspannungsbereiche, so spricht der zugehörige Diskriminator 64 an und erzeugt an einem Ausgang 70 ein Ausgangssignal. Dieses Ausgangssignal wird auf einen steuerbaren Umschalter 72 gegeben. Pro Diskriminator 64 ist dabei ein steuerbarer Umschalter 72 vorgesehen. Jeder steuerbare Umschalter 72 ist mit zwei Eingängen 74,76, einem Ausgang 78 und einem Steuereingang 80 versehen, der mit dem Ausgang des zugehörigen Diskriminators 64 verbunden ist. Die Eingänge 76 sämtlicher steuerbarer Umschalter 72 sind mit dem Eingang 58 der Multiplexschaltung 56 verbunden, an dem das Ausgangssignal der Fuzzy-Regel anliegt. Die anderen Eingänge 74 der steuerbaren Umschalter 72 sind mit Massepotential verbunden. Die Grundstellung der Umschalter 72 ist die, daß die mit Masse verbundenen Eingänge 74 mit den Ausgängen 78 der Umschalter 72 verbunden sind. Wird an den Steuereingang 80 eines steuerbaren Umschalters 72 das beim Ansprechen des zugehörigen Diskriminators 64 von diesem erzeugte Ausgangssignal angelegt, so schaltet der steuerbare Umschalter 72 um, mit der Folge, daß sein zweiter Eingang 76 nunmehr mit dem Ausgang 78 verbunden ist. Auf diese Weise wird also durch die Wahl der Größe der Steuerspannung am Eingang 60 der Multiplexschaltung 56 beeinflußt, auf welchen Ausgang 62 der Multiplexschaltung 56 das an dessen Eingang 58 anliegende Signal durchgeschaltet wird. Damit läßt sich der "THEN"-Teil einer jeden Fuzzy-Regel durch Anlegen einer externen Spannung, nämlich der Steuerspannung am Eingang 60 der Multiplexschaltung 56, im nachhinein verändern.

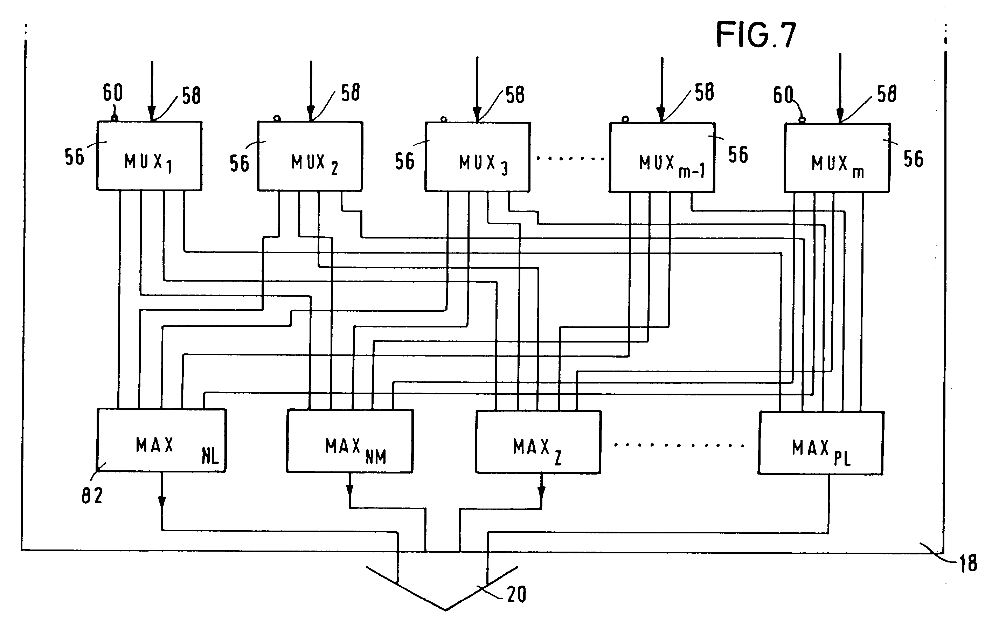

Für jede Fuzzy-Regel ist also eine Multiplexschaltung 56 vorgesehen. Für die Weiterverarbeitung und insbesondere die Defuzzifizierung ist nun entscheidend, welche Fuzzy-Regel bzw. welche Multiplexschaltung den für die einzelnen linguistischen Ausgangsvariablen maximalen Zugehörigkeitsgrad liefert. Daher sind gemäß Fig. 7 die Ausgänge sämtlicher Multiplexschaltungen 56 mit Maximal-Ausgangsschaltungen 82 verbunden, wobei so viele Maximal-Ausgangsschaltungen 82 vorgesehen sind, wie linguistische Ausgangsvariablen vorhanden sind. Die den einzelnen linguistischen Ausgangsvariablen zugeordneten Ausgänge 62 der Multiplexschaltungen 56 sind mit der dieser linguistischen Ausgangsvariablen zugeordneten Maximal-Ausgangsschaltung 82 verbunden (s. Fig. 7). Die Maximal-Ausgangsschaltungen 82 liefern jeweils einen einzigen Ausgangswert, der den maximalen Zugehörigkeitsgrad eines Regelausgangs zu der betreffenden linguistischen Ausgangsvariablen darstellt.

Die Ausgangssignale der Maximal-Ausgangsschaltungen 82 stellen die Ausgangssignale 20 der Inferenzschaltung 18 dar, die anschließend der Defuzzifizierungsschaltung 22 als Eingangssignale zugeführt werden.

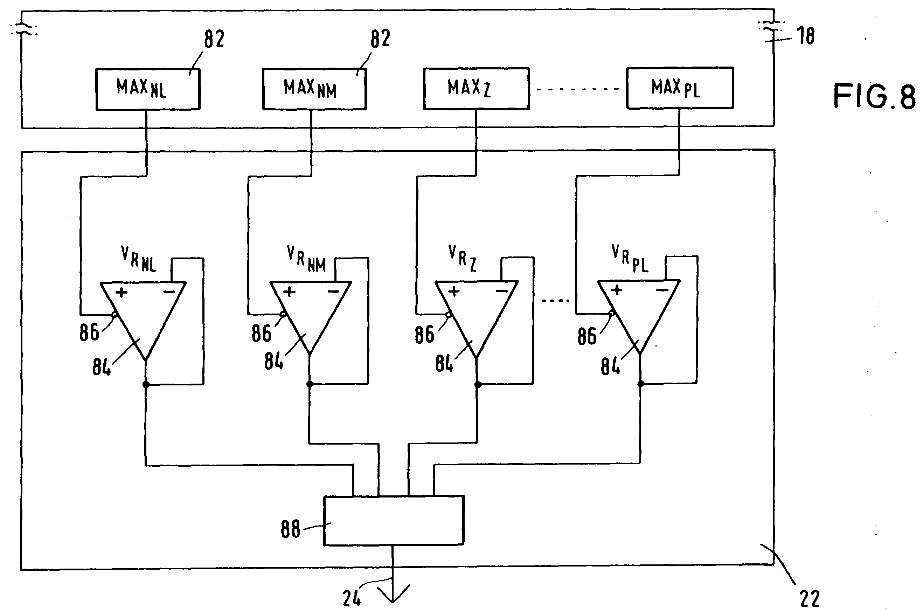

In Fig. 8 ist ein Blockschaltbild für die Defuzzifizierungsschaltung 22 gezeigt. Die Defuzzifizierungsschaltung 22 ist für jede linguistische Ausgangsvariable mit einem Verstärker 84 mit jeweils einstellbarem Verstärkungsfaktor versehen, an deren Verstärkungssteuereingängen 86 die Ausgangssignale der Inferenzschaltung 18 anliegen. Am Eingang eines jeden Verstärkers 84 liegt eine Referenzspannung an. Sämtliche dieser Referenzspannungen sind unterschiedlich groß und stellen die linguistischen Ausgangsvariablen repräsentierende Spannungswerte dar. Die Größe der den Verstärkungssteuereingängen 86 zugeführten Ausgangssignale 20 der Inferenzschaltung 18 bestimmt den Verstärkungsfaktor des betreffenden Verstärkers 84, der Verstärkungsfaktoren größer und kleiner als 1 annehmen kann. Die Ausgänge der Verstärker 84 sind mit einer Summierstufe 88 verbunden, in der eine Summation der zugeführten Ausgangssignale erfolgt. Das von dieser Summierstufe 88 ausgegebene Summationssignal ist das Ausgangssignal 24 des Fuzzy-Controllers 10.

Die Defuzzifizierungsschaltung 22 gemäß Fig. 8 führt zur Ermittlung des Ausgangssignals 24 die sogenannte Center-Of-Gravity-Methode durch, ohne daß es dazu einer Division bedarf, was nach der Theorie dieser Methode erforderlich ist. Das reduziert die benötigte Chip-Fläche zur Realisierung des Fuzzy-Controllers. Außerdem erhöht sich die Signal-Verarbeitungsgeschwindigkeit ganz entscheidend (um mehrere Größenordnungen bis zu 10⁶ und mehr).

## Patentansprüche

1. Analoger Fuzzy-Logik-Controller mit
- einer Fuzzifizierungsschaltung (12) zum Umwandeln mindestens eines analogen Eingangssignals (14) in mindestens ein den Grad der Zugehörigkeit des Eingangssignals (14) zu mindestens einer linguistischen Eingangsvariablen beschreibendes und einen Fuzzy-Wert repräsentierendes analoges Ausgangssignal (16),
- einer Inferenzschaltung (18) zum Weiterverarbeiten des mindestens einen analogen Ausgangssignals (16) entsprechend vorgegebenen Fuzzy-Regeln und zum Ausgeben mindestens eines analogen Ausgangssignals (20), das den Grad der Zugehörigkeit des weiterverarbeiteten Ausgangssignals (16) der Fuzzifizierungsschaltung (12) zu mindestens einer linguistischen Ausgangsvariablen repräsentiert, und
- einer Defuzzifizierungsschaltung (22) zum Umsetzen des mindestens einen Ausgangssignals (20) der Inferenzschaltung (18) in mindestens ein dem Grad der Zugehörigkeit des Ausgangssignals (20) der Inferenzschaltung (18) zu der mindestens einen linguistischen Ausgangsvariablen entsprechendes Gesamtausgangssignal,
**dadurch gekennzeichnet,**
- daß die Fuzzifizierungsschaltung (12) versehen ist mit
- mehreren ersten Spannungserzeugungsvorrichtungen mit zueinander versetzten ersten Übertragungsfunktionen (Z;S), wobei an die Eingänge der ersten Spannungserzeugungsvorrichtungen das Eingangssignal (14) anlegbar ist und die ersten Spannungserzeugungsvorrichtungeninnerhalb unterschiedlicher Spannungswertebereiche (34,36) des Eingangssignals (14) an ihren Ausgängen ein mit zunehmender Größe des Eingangssignals (14) kleiner werdendes erstes Ausgangssignal erzeugen,
- mehreren zweiten Spannungserzeugungsvorrichtungen mit zueinander versetzten zweiten Übertragungsfunktionen (S;Z), wobei an die Eingänge der zweiten Spannungserzeugungsvorrichtungen das Eingangssignal (14) anlegbar ist und die zweiten Spannungserzeugungsvorrichtungen innerhalb unterschiedlicher Spannungswertebereiche (34,36) des Eingangssignals (14) an ihren Ausgängen ein mit zunehmender Größe des Eingangssignals (14) größer werdendes zweites Ausgangssignal erzeugen,
- einer ersten Überlagerungsschaltung (VFA) zum Überlagern der Ausgangssignale mehrerer auswählbarer erster Spannungserzeugungsvorrichtungen oder zum Durchschalten des Ausgangssignals einer auswählbaren ersten Spannungserzeugungsvorrichtung, wobei die Eingänge oder der Eingang der ersten Überlagerungsschaltung (VFA) mit den Ausgängen der ausgewählten ersten Spannungserzeugungsvorrichtungen oder dem Ausgang der ausgewählten ersten Spannungserzeugungsvorrichtung verbunden sind bzw. ist und wobei an dem Ausgang der ersten Überlagerungsschaltung (VFA) das Überlagerungssignal aus den Ausgangssignalen der ausgewählten ersten Spannungserzeugungsvorrichtungen oder das Ausgangssignal der ausgewählten ersten Spannungserzeugungsvorrichtung ansteht,
- einer zweiten Überlagerungsschaltung (VFA) zum Überlagern der Ausgangssignale mehrerer auswählbarer zweiter Spannungserzeugungsvorrichtungen oder zum Durchschalten des Ausgangssignals einer auswählbaren zweiten Spannungserzeugungsvorrichtung, wobei die Eingänge oder der Eingang der zweiten Überlagerungsschaltung (VFA) mit den Ausgängen der ausgewählten zweiten Spannungserzeugungsvorrichtungen oder dem Ausgang der ausgewählten zweiten Spannungserzeugungsvorrichtung verbunden sind bzw. ist und wobei an dem Ausgang der zweiten Überlagerungsschaltung (VFA) das Überlagerungssignal aus den Ausgangssignalen der ausgewählten zweiten Spannungserzeugungsvorrichtungen oder das Ausgangssignal der ausgewählten zweiten Spannungserzeugungsvorrichtung ansteht, und
- einer mit den beiden Ausgängen der einer linguistischen Eingangsvariablen zugeordneten ersten und zweiten Überlagerungsschaltungen (VFA) verbundenen Filterschaltung (52) zum Durchschalten des größeren oder des kleineren der Ausgangssignale der beiden Überlagerungsschaltungen (VFA), wobei das Ausgangssignal der Filterschaltung (52) dem Fuzzy-Wert für das an den ersten und den zweiten Spannungserzeugungsvorrichtungen anliegende Eingangssignal (14) entspricht, und
- daß die Inferenzschaltung (18) versehen ist mit mindestens einer steuerbaren Multiplexschaltung (56) mit einem Nutzsignaleingang (58), einem Steuersignaleingang (60) und mehreren den linguistischen Ausgangsvariablen zugeordneten Nutzsignalausgängen (62), wobei mittels der am Steuersignaleingang (60) anlegbaren Steuerspannung vorgebbar ist, ob und, wenn ja, auf welchen Nutzsignalausgang (62) der Multiplexschaltung (56) ein an dem Nutzsignaleingang (58) anlegbares Eingangssignal durchschaltbar ist.

2. Analoger Fuzzy-Logik-Controller nach Anspruch 1, dadurch gekennzeichnet, daß die ersten und die zweiten Überlagerungsschaltungen (VFA) jeweils Steuereingänge (44) zum Anlegen von Steuersignalen (V_{S}) aufweisen und daß die ersten und die zweiten Überlagerungsschaltungen (VFA) eine gewichtete Überlagerung der Ausgangssignale der jeweils ausgewählten ersten bzw. zweiten Spannungserzeugungsvorrichtungen oder eine Durchschaltung des gewichteten Ausgangssignals der jeweils ausgewählten ersten bzw. zweiten Spannungserzeugungsvorrichtung ausführen, wobei die Wichtungsfaktoren durch die Steuersignale (V_{S}) bestimmt sind.

3. Analoger Fuzzy-Logik-Controller nach Anspruch 1 oder 2, dadurch gekennzeichnet, daß die erste und die zweite Überlagerungsschaltung (VFA) jeweils eine Summierausgangsstufe (46) zum Summieren der Ausgangssignale der ausgewählten ersten bzw. zweiten Spannungserzeugungsvorrichtungen oder zum Durchschalten des Ausgangssignals der ausgewählten ersten bzw. zweiten Spannungserzeugungsvorrichtung aufweisen.

4. Analoger Fuzzy-Logik-Controller nach Anspruch 2 oder 3, soweit dieser auf Anspruch 2 rückbezogen ist, dadurch gekennzeichnet, daß die erste und die zweite Überlagerungsschaltung (VFA) an ihren jeweiligen Eingängen Verstärker (42) mit durch die Steuersignale (V_{S}) einstellbaren Verstärkungsfaktoren aufweisen.

5. Analoger Fuzzy-Logik-Controller nach einem der Ansprüche 1 bis 4, dadurch gekennzeichnet, daß die ersten Übertragungsfunktionen (Z) in den für die ersten Spannungserzeugungsvorrichtungen geltenden unterschiedlichen Spannungswertebereichen (36) des Eingangssignals (14) jeweils im wesentlichen Z-förmig und die zweiten Übertragungsfunktionen (S) in den für die zweiten Spannungserzeugungsvorrichtungen geltenden unterschiedlichen Spannungswertebereichen (36) des Eingangssignals (14) jeweils im wesentlichen S-förmig sind.

6. Analoger Fuzzy-Logik-Controller nach einem der Ansprüche 1 bis 5, dadurch gekennzeichnet, daß jeweils eine erste und eine zweite Spannungserzeugungsvorrichtung durch einen Differenzverstärker (DA) mit zwei Eingängen (26,28) und zwei Ausgängen (30,32) realisiert ist, wobei an den einen Eingang (28) eine Referenzspannung und an den anderen Eingang (26) das Eingangssignal (14) anlegbar ist und wobei die Übertragungsfunktion zwischen dem mit dem Eingangssignal (14) beaufschlagbaren Eingang (26) und dem einen Ausgang (32) Z-förmig und die Übertragungsfunktion zwischen dem mit dem Eingangssignal (14) beaufschlagbaren Eingang (26) und dem anderen Ausgang (30) S-förmig ist.

7. Analoger Fuzzy-Logik-Controller nach einem der Ansprüche 1 bis 6, dadurch gekennzeichnet, daß zur Erzeugung mehrerer den Grad der Zugehörigkeit eines Eingangssignals (14) zu mehreren linguistischen Eingangsvariablen beschreibender Ausgangssignale (16) pro linguistischer Eingangsvariable eine erste und eine zweite Überlagerungsschaltung (VFA), deren Eingänge jeweils mit den Ausgängen unterschiedlicher erster und zweiter Spannungserzeugungsvorrichtungen verbindbar sind, und jeweils eine mit den Ausgängen der beiden Überlagerungsschaltungen (VFA) verbundene Filterschaltung (52) vorgesehen ist.

8. Analoger Fuzzy-Logik-Controller nach einem der Ansprüche 1 bis 7, dadurch gekennzeichnet, daß die Multiplexschaltung (56) versehen ist mit
- mindestens einem mit zwei Eingängen (66,68) und einem Ausgang (70) versehenen Diskriminator (64) zum Vergleichen einer an dem einen Eingang (66) anliegenden einer linguistischen Ausgangsvariablen entsprechenden Referenzspannung mit einer an dem anderen Eingang (68) anliegenden Steuerspannung, wobei das Ergebnis des Vergleichs am Ausgang (70) ausgebbar ist, und
- mindestens einem steuerbaren Schalter (72) mit einem mit dem Ausgang (70) des Diskriminators (64) verbundenen Steuereingang (80) sowie einem Signaleingang (76), an dem das Eingangssignal anliegt, und mit einem Ausgang (78), wobei der steuerbare Schalter (72) in Abhängigkeit davon, ob die Steuerspannung größer als bzw. größer als oder gleich oder kleiner als die Referenzspannung ist, das am Signaleingang (76) anliegende Eingangssignal auf den Ausgang (78) durchschaltet.

9. Analoger Fuzzy-Logik-Controller nach Anspruch 8, dadurch gekennzeichnet, daß für mehrere linguistische Ausgangsvariablen für jede dieser linguistischen Ausgangsvariablen mehrere Diskriminatoren (64) und mehrere steuerbare Schalter (72) vorgesehen sind.

10. Analoger Fuzzy-Logik-Controller nach einem der Ansprüche 1 bis 9, dadurch gekennzeichnet, daß bei mehreren Eingangssignalen für eine linguistische Ausgangsvariable pro Eingangssignal ein Diskriminator und ein steuerbarer Schalter (72) vorgesehen sind und daß die Ausgänge (78) sämtlicher steuerbarer Schalter (72) mit einer Filterschaltung (82) verbunden sind, die einen Ausgang aufweist, an dem das größte der von den steuerbaren Schaltern (72) ausgegebene Ausgangssignale durchschaltbar ist.

11. Analoger Fuzzy-Logik-Controller nach einem der Ansprüche 1 bis 10, dadurch gekennzeichnet, daß die Defuzzifizierungsschaltung (22) versehen ist mit
- mindestens einem Verstärker (84) mit steuerbarem Verstärkungsfaktor zum Verstärken einer einer linguistischen Ausgangsvariablen entsprechenden Referenzspannung, wobei für jede einer linguistischen Ausgangsvariablen entsprechenden Referenzspannung ein Verstärker (84) vorhanden ist und die Größe des Verstärkungsfaktors durch dasjenige Ausgangssignal der Inferenzschaltung (18) einstellbar ist, das den Grad der Zugehörigkeit der entsprechend den Fuzzy-Regeln weiterverarbeiteten Ausgangssignale (16) der Fuzzifizierungsschaltung (12) zu den betreffenden linguistischen Ausgangsvariablen beschreibt, und
- einer Summierausgangsstufe (88) zur Erzeugung des Gesamtausgangssignals als Summe der Ausgangssignale der Verstärker (84).

## Claims

1. An analog fuzzy controller comprising:
- a fuzzification circuit (12) for converting at least one analog input signal (14) to at least one analog output signal (16) describing the degree of membership of the input signal (14) to at least one linguistic input variable and representing a fuzzy value,
- an inference circuit (18) for processing the at least one analog output signal (16) according to predetermined fuzzy rules and for outputting at least one analog output signal (20) representing the degree of membership of the processed output signal (16) of the fuzzification circuit (12) to at least one linguistic output variable, and
- a defuzzification circuit (22) for converting the at least one output signal (20) of the inference circuit (18) to at least one overall output signal that corresponds to the degree of membership of the output signal (20) of the inference circuit (18) to the at least one linguistic output variable,
characterized in that the fuzzification circuit (12) is provided with
- a plurality of first voltage generating devices with mutually offset first transfer functions (Z; S), wherein the input signal (14) may be applied to the inputs of the first voltage generating devices and wherein, within different voltage value ranges (34, 36) of the input signal (14), the first voltage generating devices generate a first output signal at their outputs that decreases with the increase of the input signal (14),
- a plurality of second voltage generating devices with mutually offset second transfer functions (S; Z), wherein the input signals (14) may be applied to the inputs of the second voltage generating devices and wherein, within different voltage value ranges (34, 36) of the input signal (14), the second voltage generating devices generate a second output signal at their outputs that increases with the increase of the input signal (14),
- a first superposing circuit (VFA) for superposing the output signals of a plurality of selectable first voltage generating devices or for connecting through the output signal of a selectable first voltage generating device, the inputs or the input of the first superposing circuit (VFA) being connected to the outputs of the selected first voltage generating devices or the output of the selected first voltage generating device, and wherein the superposing signal of the output signals of the selected first voltage generating devices or of the output signal of the selected first voltage generating device is present at the output of the first superposing circuit (VFA),
- a second superposing circuit (VFA) for superposing the output signals of a plurality of selectable second voltage generating devices or for connecting through the output signal of a selectable second voltage generating device, the inputs or the input of the second superposing circuit (VFA) being connected to the outputs of the selected second voltage generating devices or the output of the selected second voltage generating device, and wherein the superposing signal of the output signals of the selected second voltage generating devices or of the output signal of the selected second voltage generating device is present at the output of the second superposing circuit (VFA), and
- a filter circuit (52) connected with both outputs of the first and second superposing circuits (VFA), which are associated with a linguistic variable, for connecting through the greater or the smaller one of the output signals of the two superposing circuits (52), the output signals of the filter circuit (52) corresponding to the fuzzy value for the input signal present at the first and second voltage generating devices, and
- the inference circuit (18) comprises at least one controllable multiplex circuit (56) having a useful signal input (58), a control signal output (60) an a plurality of useful signal outputs (62) associated with the linguistic output variables, the control voltage that may be applied to the control signal input (60) allowing to predetermine whether and if, and if so, to which useful signal output (62) of the multiplex circuit (56) an input signal that may be applied to the useful signal input (58) is connected through.

2. The analog fuzzy logic controller of claim 1, characterized in that said first and second superposing circuits (VFA) each have control inputs (44) for applying control signals (Vₛ), and that said first and second superposing circuits (VFA) perform a weighted superposing of the output signals of the respective selected first or second voltage generating devices or connect the weighted output signal of the respective selected first or second voltage generating devices through, the weighting factors being determined by the control signals (Vₛ).

3. The analog fuzzy logic controller of claim 1 or 2, characterized in that said first and second superposing circuits (VFA) each comprise a summation output stage (46) for summing the output signals of the selected first or second voltage generating devices or for connecting the output signal of the selected first or second voltage generating devices through.

4. The analog fuzzy logic controller of claim 2 or 3, as far as the latter refers to claim 2, characterized in that said first and second superposing circuits (VFA) have amplifiers (42) provided at their inputs, the amplification factors of the amplifiers being adjustable by said control signals (Vₛ).

5. The analog fuzzy logic controller, of one of claims 1 to 4, characterized in that said first transfer functions (Z) are substantially Z-shaped in the different voltage value ranges (36) of the input signal that are valid for the first voltage generating devices and that said second transfer functions (S) are substantially S-shaped in the different voltage value ranges (36) of the input signal (14) that are valid for the second voltage generating devices.

6. The analog fuzzy controller of one of claims 1 to 5, characterized in that a first and a second voltage generating device are realized, respectively, by a differential amplifier (DA) with two inputs (26, 28) and two outputs (30, 32), wherein a reference voltage may be applied to one input (28) and the input signal (14) may be applied to the other input (26), the transfer function between the input (26), to which the input signal (14) may be applied, and the one output (32) being Z-shaped and the transfer function between the input (26), to which the input signal (14) may be applied, and the other output (30) is S-shaped.

7. The analog fuzzy logic controller of one of claims 1 to 6, characterized in that fro generating a plurality of output signals (16) describing the degree of membership of an input signal (14) to a plurality of linguistic input variables, a first and a second superposing circuit (VFA) are provider per linguistic input variable, the inputs of the circuits being respectively connectable with the outputs of different first and second voltage generating devices, and that a filter circuit (52) is provided, respectively, which is connected to the outputs of the two superposing circuits (VFA).

8. The analog fuzzy logic controller of one of claims 1 to 7, characterized in that the multiplex circuit (56) is provided with
- at least one discriminator (64) having two inputs (66, 68) and an output (70), for comparing a reference voltage present at one input (66) and corresponding to a linguistic output variable to a control voltage present at the other input (68), wherein the result of the comparison may be outputted at the output (70), and
- at least one controllable switch (72) having a control input (80) connected to the output (70) of the discriminator (64), a signal input (76) to which the input signal is applied, and an output (78), the controllable switch (72) connecting the input signal present at the signal input (76) through to the output (78), depending on whether the control voltage is higher, or higher or equal, or smaller than the reference voltage.

9. The analog fuzzy logic controller of claim 8, characterized in that, for a plurality of linguistic output variables, a plurality of discriminators (64) and a plurality of controllable switches (72) are provided for each of these linguistic output variable.

10. The analog fuzzy logic controller of claim 7 or 8, characterized in that for a plurality of input signals for a linguistic output variable, a discriminator and a controllable switch (72) are provided for each of these input signals, and that the outputs (78) of all controllable switches (72) are connected to a filter circuit (82) having an output to which the largest of the output signals outputted from the controllable switches (72) may be connected through.

11. The analog fuzzy logic controller of one of claims 1 to 10, characterized in that the defuzzification circuit (22) is provided with
- at least one amplifier (84) with a controllable amplification factor for amplifying a reference voltage corresponding to a linguistic output variable, an amplifier (84) being provided for each reference voltage that corresponds to a linguistic output variable and the magnitude of the amplification factor being adjustable by that output signal of the inference circuit (18) that describes the degree of membership of the output signals (16) from the fuzzification circuit (12), processed according to the fuzzy rules, to the respective linguistic output variables, and
- a summation output stage (88) for generating the overall output signal as the sum of the output signals of the amplifiers (84).

## Revendications

1. Unité de commande analogique à logique floue comprenant
- un circuit de fuzzification (12) destiné à transformer au moins un signal d'entrée analogique (14) en au moins un signal de sortie analogique (16) définissant le degré d'appartenance du signal d'entrée (14) à au moins une variable linguistique d'entrée et représentant une valeur floue,
- un circuit d'inférence (18) destiné au traitement ultérieur du signal de sortie analogique (16), au moins au nombre d'un, conformément à des réglages à logique floue prédéfinis, et destiné à émettre au moins un signal de sortie analogique (20), qui représente le degré d'appartenance du signal de sortie (16) traité du circuit de fuzzification (12), à au moins une variable linguistique de sortie, et
- un circuit de défuzzification (22) destiné à transformer le signal de sortie (20), au moins au nombre d'un, du circuit d'inférence (18) en au moins un signal de sortie global correspondant au degré d'appartenance du signal de sortie (20) du circuit d'inférence (18) à au moins une des variables linguistiques de sortie,
caractérisée
- en ce que le circuit de fuzzification (12) comprend
- plusieurs premiers dispositifs générateurs de tension ayant des premières fonctions de transfert (Z ; S), décalées les unes par rapport aux autres, le signal d'entrée (14) pouvant être appliqué aux entrées des premiers dispositifs générateurs de tension et les premiers dispositifs générateurs de tension, à l'intérieur de différentes plages de valeurs de tension (34, 36) du signal d'entrée (14), émettent à leurs sorties un premier signal de sortie qui décroît lorsque la valeur du signal d'entrée (14) augmente,
- plusieurs deuxièmes dispositifs générateurs de tension ayant des deuxièmes fonctions de transfert (S ; Z), décalées les unes par rapport aux autres, le signal d'entrée (14) pouvant être appliqué aux entrées des deuxièmes dispositifs générateurs de tension et les deuxièmes dispositifs générateurs de tension, à l'intérieur de différentes plages de valeurs de tension (34, 36) du signal d'entrée (14), émettent à leurs sorties un deuxième signal de sortie qui croît lorsque la valeur du signal d'entrée (14) augmente,
- un premier circuit de superposition (VFA) destiné à superposer les signaux de sortie de plusieurs dispositifs générateurs de tension sélectionnables ou destiné à transmettre le signal de sortie d'un premier dispositif générateur de tension sélectionnable, les entrées ou l'entrée du premier circuit de superposition (VFA) étant reliées aux sorties des premiers dispositifs générateurs de tension sélectionnés ou à la sortie du premier dispositif générateur de tension sélectionné, et le signal de superposition provenant des signaux de sortie des premiers dispositifs générateurs de tension sélectionnés ou du signal de sortie du premier dispositif générateur de tension sélectionné étant présent à la sortie du premier circuit de superposition (VFA),
- un deuxième circuit de superposition (VFA) destiné à superposer les signaux de sortie de plusieurs dispositifs générateurs de tension sélectionnables ou destiné à transmettre le signal de sortie d'un deuxième dispositif générateur de tension sélectionnable, les entrées ou l'entrée du deuxième circuit de superposition (VFA) étant reliées aux sorties des deuxièmes dispositifs générateurs de tension sélectionnés ou à la sortie du deuxième dispositif générateur de tension sélectionné, et le signal de superposition provenant des signaux de sortie des deuxièmes dispositifs générateurs de tension sélectionnés ou du signal de sortie du deuxième dispositif générateur de tension sélectionné étant présent à la sortie du deuxième circuit de superposition (VFA),
- un circuit de filtrage (52), relié aux deux sorties du premier et du deuxième circuit de superposition (VFA) attribués à une variable linguistique d'entrée, lequel circuit de filtrage est destiné à transmettre le plus grand ou le plus petit des signaux de sortie des deux circuits de superposition (VFA), le signal de sortie du circuit de filtrage (52) correspondant à la valeur floue pour le signal d'entrée (14) à appliquer au premier et au deuxième dispositif générateur de tension, et
- en ce que le circuit d'inférence (18) comprend au moins un circuit de multiplexage (56) comportant une entrée pour signaux utiles (58), une entrée pour signaux de commande (60) et plusieurs sorties pour signaux utiles (62) attribuées aux variables linguistiques de sortie, dans lequel circuit de multiplexage la tension de commande appliquée sur l'entrée pour signaux de commande (60) permet de définir s'il est possible de transmettre un signal d'entrée applicable sur l'entrée pour signaux utiles (58) et, si oui, sur quelle sortie pour signaux utiles (62) du circuit de multiplexage (56) il est possible de transmettre ledit signal d'entrée.

2. Unité de commande analogique à logique floue selon la revendication 1, caractérisée en ce que les premiers et les deuxièmes circuits de superposition (VFA) comportent chacun des entrées de commande (44) destinées à recevoir des signaux de commande (Vₛ), et en ce que les premiers et les deuxièmes circuits de superposition (VFA) effectuent une superposition pondérée des signaux de sortie de chaque premier ou de chaque deuxième dispositif générateur de tension sélectionné ou transmettent le signal de sortie pondéré de chaque premier ou de chaque deuxième dispositif générateur de tension sélectionné, les facteurs de pondération étant définis par les signaux de commande (Vₛ).

3. Unité de commande analogique à logique floue selon la revendication 1 ou 2, caractérisée en ce que le premier et le deuxième circuit de superposition (VFA) comportent chacun un étage de sortie de sommation (46) destiné à faire la somme des signaux de sortie des premiers ou des deuxièmes dispositifs générateurs de tension sélectionnés ou destiné à transmettre le signal de sortie du premier ou du deuxième dispositif générateur de tension sélectionné. .

4. Unité de commande analogique à logique floue selon la revendication 2 ou 3, dans la mesure où cette dernière dépend de la revendication 2, caractérisée en ce que le premier et le deuxième circuit de superposition (VFA) comportent à leurs entrées respectives des amplificateurs (42) ayant des facteurs d'amplification réglables par les signaux de commande (Vₛ).

5. Unité de commande analogique à logique floue selon l'une quelconque des revendications 1 à 4, caractérisée en ce que les premières fonctions de transfert (Z) sont chacune sensiblement en forme de Z dans les différentes plages de valeurs de tension (36) du signal d'entrée (14), afférentes aux premiers dispositifs générateurs de tension, et les deuxièmes fonctions de transfert (S) sont chacune sensiblement en forme de S dans les différentes plages de valeurs de tension (36) du signal d'entrée (14), afférentes aux deuxièmes dispositifs générateurs de tension.

6. Unité de commande analogique à logique floue selon l'une quelconque des revendications 1 à 5, caractérisée en ce que chaque premier et deuxième dispositif générateur de tension est réalisé par un amplificateur différentiel (DA) comprenant deux entrées (26, 28) et deux sorties (30, 32), une tension de référence pouvant être appliquée sur l'une des entrées (28) et un signal d'entrée (14) sur l'autre entrée (26), et la fonction de transfert étant en forme de Z entre l'entrée (26) recevant le signal d'entrée (14) et l'une des sorties (32) et la fonction de transfert étant en forme de S entre l'entrée (26) recevant le signal d'entrée (14) et l'autre sortie (30).

7. Unité de commande analogique à logique floue selon l'une quelconque des revendications 1 à 6, caractérisée en ce que, pour émettre plusieurs signaux de sortie (16), définissant le degré d'appartenance d'un signal d'entrée (14) à plusieurs variables linguistiques d'entrée, il est prévu pour chaque variable linguistique d'entrée un premier et un deuxième circuit de superposition (VFA), dont les entrées sont reliées chacune aux sorties de différents premiers et deuxièmes dispositifs générateurs de tension, et un circuit de filtrage (52) relié aux sorties des deux circuits de superposition (VFA).

8. Unité de commande analogique à logique floue selon l'une quelconque des revendications 1 à 7, caractérisée en ce que le circuit de multiplexage (56) comprend
- au moins un discriminateur (64) comprenant deux entrées (66, 68) et une sortie (70), destiné à comparer une tension de référence, appliquée à l'une des entrées (66) et correspondant à une variable linguistique de sortie, à une tension de commande appliquée sur l'autre entrée (68), le résultat de la comparaison pouvant être émis à la sortie (70), et
- au moins un commutateur comandable (72) comprenant une entrée de commande (80), qui est reliée à la sortie (70) du discriminateur (64), ainsi qu'une entrée pour signaux (76), sur laquelle est appliqué le signal d'entrée, et une sortie (78), le commutateur commandable (72) transmettant vers la sortie (78) le signal d'entrée appliqué à l'entrée pour signaux (76) selon que la valeur de la tension de commande est supérieure à, ou bien supérieure ou égale à, ou encore inférieure à la tension de référence.

9. Unité de commande analogique à logique floue selon la revendication 8, caractérisée en ce que, pour plusieurs variables linguistiques de sortie, il est prévu pour chacune de ces variables linguistiques de sortie plusieurs discriminateurs (64) et plusieurs commutateurs commandables (72).

10. Unité de commande analogique à logique floue selon l'une quelconque des revendications 1 à 9, caractérisée en ce que, en présence de plusieurs signaux d'entrée pour une variable linguistique de sortie, il est prévu pour chaque signal d'entrée un discriminateur et un commutateur commandable (72) et en ce que les sorties (78) de tous les commutateurs commandables (72) sont reliées à un circuit de filtrage (82), qui comprend une sortie à laquelle le plus grand des signaux de sortie émis par les commutateurs commandables (72) peut être transmis.

11. Unité de commande analogique à logique floue selon l'une quelconque des revendications 1 à 10, caractérisée en ce que le circuit de défuzzification (22) comprend :
- au moins un amplificateur (84) ayant un facteur d'amplification réglable, destiné à amplifier une tension de référence correspondant à une variable linguistique de sortie, un amplificateur (84) étant prévu pour chacune de ces variables linguistiques de sortie et la valeur du facteur d'amplification étant réglable par le signal de sortie du circuit d'inférence (18), qui définit le degré d'appartenance des signaux de sortie (16), traités en fonction des réglages à logique floue, du circuit de fuzzification (12) aux variables linguistiques de sortie concernées, et
- un étage de sommation (88) destiné à émettre le signal de sortie global résultant de la somme des signaux de sortie des amplificateurs (84).
